Europäisches Patentamt

European Patent Office

Office européen des brevets

(19)

(11) Publication number: **0 171 841**
**B1**

(12) **EUROPEAN PATENT SPECIFICATION**

(45) Date of publication of patent specification: **08.03.89**

(51) Int. Cl.⁴: **G 02 B 6/44**

(21) Application number: **85201161.8**

(22) Date of filing: **10.07.85**

(54) **Method of manufacturing an optical cable element and device for carrying out the method.**

(30) Priority: **31.07.84 NL 8402386**

(43) Date of publication of application:
**19.02.86 Bulletin 86/08**

(45) Publication of the grant of the patent:
**08.03.89 Bulletin 89/10**

(84) Designated Contracting States:
**DE FR GB IT NL**

(56) References cited:
**EP-A-0 078 213**
**EP-A-0 108 850**
**GB-A-2 121 209**
**US-A-4 205 899**
**US-A-4 347 697**

**PATENTS ABSTRACTS OF JAPAN, 1977, page
10372 E 77; & JP-A-52 126 238**

(73) Proprietor: **NKF KABEL B.V.
Noordkade 64
NL-2741 EZ Waddinxveen (NL)**

(72) Inventor: **In 't Veld, Steven Hendrik Karel
c/o INT. OCTROOIBUREAU B.V. Prof. Holstlaan 6
NL-5656 AA Eindhoven (NL)**

(74) Representative: **Klijberg, Josephus B.J. et al
Nederlandsch Octrooibureau Johan de Wittlaan
15
P.O. Box 29720 NL-2502 LS 's-Gravenhage (NL)**

Courier Press, Leamington Spa, England.

## Description

The invention relates to a method of manufacturing in a continuous process an optical cable element of the kind in which one or more optical fibres are provided around a central draw core, said fibres being provided either in slots formed in the surface of a synthetic resin sheath extruded around the draw core, or in synthetic resin tubes which loosely envelop the fibres and which are connected to the surface of the draw core by using an adhesive, the slots or the tubes adhered to the draw core following a helical path around the longitudinal axis of said draw core, the direction of rotation of which changes periodically.

The invention relates furthermore to an apparatus for carrying out such a method.

The method covers the manufacture of two types of optical cable elements. The first type is the so-called slotted-core type and the second type is the so-called loose-tube type. Both types as such are sufficiently known.

A slot or a synthetic resin tube as a rule comprises only one optical fibre. However, it is possible to use more fibres per slot or tube. The synthetic resin sheath extruded around the core as a rule comprises several slots extending in parallel with each other. An analogous situation is found in an optical cable element of the loose-tube type in which several mutually parallel extending synthetic resin tubes are as a rule provided around the core. It is even possible to provide several layers of synthetic resin tubes around the core.

A helical path with changing direction of rotation is also known by the name of SZ-variation or SZ-configuration. It is very difficult to give the slots or the tubes said SZ-variation. With tubes, for example, an assembly of storage reels of the tubes has to be rotated around the draw core with periodically changing direction of rotation. This necessitates the use of complicated and expensive apparatus.

In published Japanese Patent Application Kokai No. 52-126238 a method is described for manufacturing a synthetic resin tube with SZ-slots by using an extruder which rotates periodically to the left and to the right. A rotating extruder makes the process expensive and more complicated. The greatest disadvantage is that the extrusion rate is restricted because otherwise, due the shearing effects, the slots are crushed or are otherwise deformed.

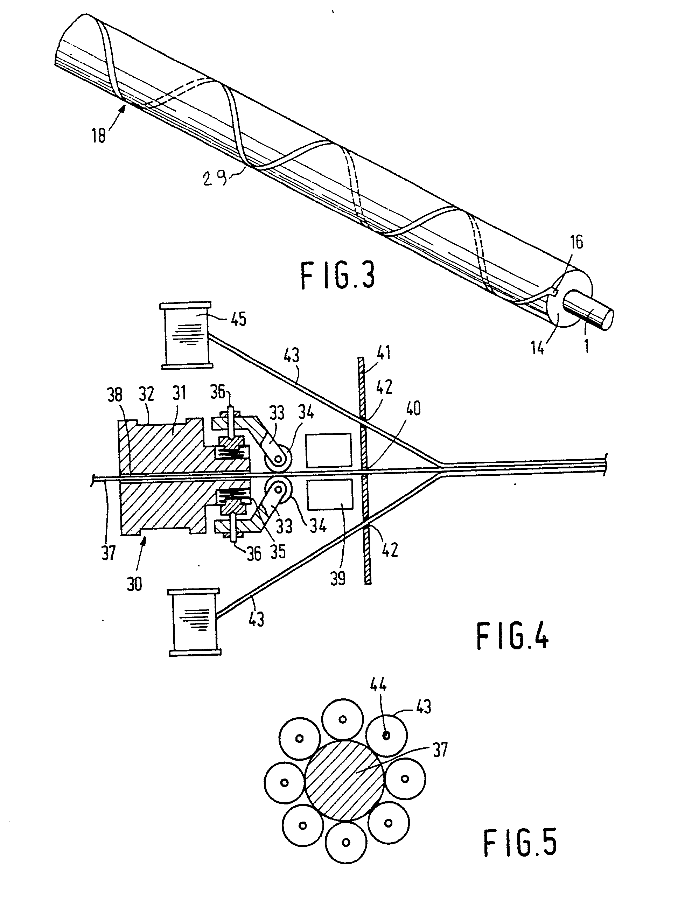

In the process described in United States Patent Specification 4,205,899 a stationary, i.e. non-rotating, extruder is used the nozzle of which has such a shape that slots are formed in the surface of the extruded sheath. The sheath is cooled in such manner that it has reasonably solidified. The sheath is then twisted by using a twister comprising a disc which is rotatable about the sheath. The disc comprises lugs (reference numeral 19 in Fig. 4) which engage in the slots. By rotating the disc alternately to the left and to the right, shearing forces are exerted on the sheath which have for their result that the slots at the location where the synthetic resin leaves the nozzle and where the synthetic resin has its most plastic character, take up an SZ-variation. The sheath is then further cooled and the slots are provided with optical fibres.

The disadvantage of the process known from the above-mentioned United States Patent Specification is that the cooling occurs in two phases and hence an interrupted cooling duct has to be used. A more serious disadvantage is that the process is very critical due to the shearing forces which have to be transmitted to the area where the synthetic resin leaves the nozzle. The danger exists that either the slots do not take up the desired shape or become damaged.

It is the object of the invention to provide a method which does not exhibit the above-mentioned disadvantages.

In agreement with this object the invention provides a method as defined in the opening paragraph, wherein the draw core, before being provided with the synthetic resin sheath or with the tubes, is twisted, with the direction of twisting being reversed periodically, whereby as a result of said twisting of the draw core the slots of the synthetic resin sheath or the synthetic resin tubes with which said draw core is subsequently provided take up said periodically reversing helical path.

The periodic reversal of the twisting direction may be carried out at any desired instant. For example the twisting direction may be reversed after one complete revolution (360°C) of tube or slot or after a part of a revolution, for example after 180°C.

In a preferred form of the method according to the invention the draw core is twisted so as to make several revolutions in one direction of rotation before the direction of rotation is reversed, whereby the tubes or the slots subsequently make corresponding revolutions.

By way of example the helix of tube or slot has such a variation that first 3—8 revolutions to the right or to the left are made and then 3—8 revolutions to the left or to the right.

A first advantage of the invention is that in the manufacture of an optical cable element of the loose-tube type not co-rotating storage reels are necessary.

A second advantage is that in the manufacture of an optical cable element of the slotted-core type the speed of the process is high and is not restricted by a low extrusion rate of the synthetic resin sheath to be provided around the draw core. Moreover, the process is less critical and SZ-slots can be provided without damage or deformations in the synthetic resin sheath extruded around the draw core. It is furthermore possible to use an uninterrupted cooling system for the solidification of the extruded sheath.

The invention also relates to an apparatus for carrying out the above-described method, which apparatus comprises either an extruder for extruding a sheath with slots around a draw core and a depositing machine for depositing optical fibres in the slots, or an adhesive dosing machine for providing a layer of adhesive on a draw core and a depositing device for providing synthetic resin tubes which contain fibres on the draw core thus provided with said adhesive layer, said apparatus further comprising, before the extruder or before the adhesive dosing machine, a clamping device which is reciprocally rotatable about the draw core and comprises wheels with which the draw core can be clamped, and therefore reciprocally twisted.

In a favourable embodiment the wheels are regularly distributed over the circumference of the draw core. A suitable number of wheels is for example, three.

In a further favourable embodiment the wheels are connected to resilient arms with which the pressure force of the wheels on the draw core can be adjusted.

Slip can be prevented by increasing the pressure force. Moreover, the position of the wheels can be adapted to different diameters of the draw core.

In still another preferred embodiment the wheels have a hollow profile which fits in the cylindrical surface of the draw core.

The invention will now be described in greater detail by way of example, with reference to the drawing, in which

Fig. 1 shows diagrammatically a first embodiment of the method according to the invention and the apparatus used,

Fig. 2 is an elevation of a part of the apparatus shown in Fig. 1 (clamping device),

Fig. 3 is a perspective view of the optical cable element obtained by means of the method and the apparatus shown in Figs. 1 and 2,

Fig. 4 shows another embodiment of the method according to the invention and the apparatus used, and

Fig. 5 is a cross-sectional view of the optical cable element obtained by means of the method and the apparatus shown in Fig. 4.

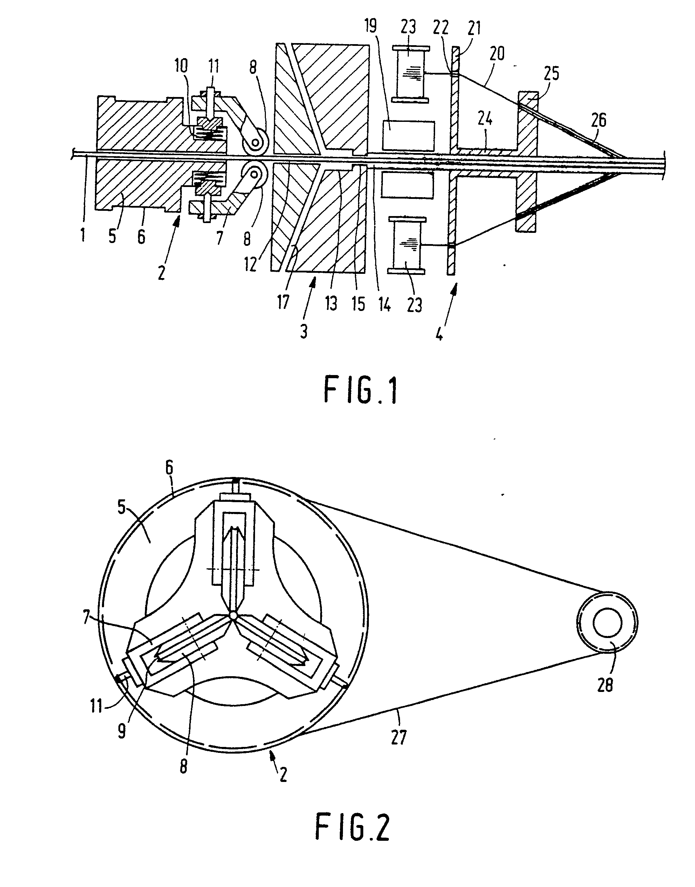

Reference numeral 1 in Fig. 1 denotes a steel draw core which is constructed, for example, from a large number of twisted elementary wires as a result of which the draw core has a proper flexibility. The draw core 1 is guided continuously in Fig. 1 from the left to the right through successively, a clamping device 2, an extruder 3, and a depositing unit 4. The clamping device 2 has a supporting member or chassis 5 with belt guide 6. The supporting member 5 can be rotated about the draw core 1 as is shown in Fig. 2. The supporting member 5 comprises three arms 7 having wheels 8 at their free ends. As shown in Fig. 2, the wheels 8 at their free ends. As shown in Fig. 2, the wheels 8 have a hollow profile 9 which engages and fits the draw core 1. By using a spring 10 and adjusting screw 11 the position of an arm can be controlled as a result of which the pressure force of wheel 8 on the draw core 1 can be adjusted and controlled. The draw core 1 extending through the clamping device 2 is twisted by the arms 7 with wheels 8, the direction of twisting changing periodically hence from the left to the right or inversely. Preferably the draw core 1 is imparted a few revolutions in one direction, the direction of twisting is then inversed and the draw core is then imparted a few rotations also in the changed hence opposite direction of twisting. A suitable periodic variation of the direction of twisting is after 5—10 revolutions.

The extruder 3 which has a central aperture 12 for guiding the draw core 1 is present immediately behind the wheels 8. In the extruder head 13 the draw core 1 is provided with a cylindrical synthetic resin sheath 14 (see also Fig. 4) which, due to the presence of lugs 15 in said head 13, comprises slots 16 (Fig. 14). The heated liquid synthetic resin is supplied via ducts 17 in the extruder 3. As a result of the twisting of draw core 1 (with periodically changing direction of twisting) caused by the clamping device 2, the slots 16 take up a helical variation 18 with changing direction of rotation as is shown in Fig. 4. The draw core 1 with synthetic resin sheath 14 is cooled by transport in a water-filled cooling duct 19. By means of deposition unit 4, optical fibres 20 are then laid in the slots 16. The deposition unit 4 comprises an aligning plate 21 having apertures 22 for passing through fibres 20 which are unwound from storage reels 23.

The aligning plate 21 is connected via a hollow shaft 24 to a depositing plate 25 comprising hollow flexible fingers 26. The optical fibres 20 are guided in the slots 16 via the hollow fingers 26 which open into and are guided by the slots 16. The deposition unit 4 is rotatable about the draw core 1. Further synthetic resin coverings or other coverings may be provided around the resulting cable element (Fig. 4). Various cable elements may also be bundled to form one larger optical cable.

In Figs. 2, 3 the same reference numerals are used for the same components as in Fig. 1.

The clamping device 2 (Fig. 2) is rotated with changing direction of rotation by using a driving belt 27 and drive motor shaft 28.

Reference numeral 29 in Fig. 3 denotes the reversal point of the direction of rotation of the helical variation 18 of slot 16.

Reference numeral 30 in Fig. 4 denotes the same clamping device as reference numeral 2 in Fig. 1. The clamping device 30 comprises a supporting member 31, belt-guide 32, arms 33, wheels 34, springs 35 and adjusting screws 36.

A draw core 37 is passed continuously through the central aperture 38 of the clamping device 30. Clamping device 30 is rotated with a periodically changing direction of rotation in a manner which is identical to that shown in Figs. 1 and 2. The draw core 37 is therefore also twisted with a periodically changing direction of movement due to the clamping between the wheels 34.

A layer of adhesive not shown is provided around the draw core 37 by means of an adhesive dosing device 39. The draw core 37 having a layer of adhesive is then passed through the central aperture 40 of guide ring 41. Via further aperture 42 in the guide ring 40 optical fibres 44 surrounded by a loose synthetic resin tube 43 (Fig. 5) are supplied to the draw core 37. The loose synthetic resin tube 43 with fibre 44 is glued on the surface of the draw core 37. The synthetic resin tube 43 with fibre 44 is unreeled from the stationary storage reels 45, which do not rotate about the draw core 37. Since the draw core 37 as mentioned above is twisted with periodically changing direction of twisting, the synthetic resin tubes take up a helical variation with periodically changing direction of rotation.

Fig. 5 is a cross-sectional view of the resulting optical cable element in which the same reference numerals are used for corresponding components as in Fig. 4. The Fig. 5 element may, if desired, be provided with further coverings or envelopes. Several optical cable elements may also be bundled to form more bulky optical cables.

## Claims

1. A method of manufacturing in a continuous process an optical cable element of the kind in which one or more optical fibres (20; 44) are provided around a central draw core (1; 37), said fibres being provided either in slots (16) formed in the surface of a synthetic resin sheath (14) extruded around the draw core, or in synthetic resin tubes (43) which loosely envelop the fibres (44) and which are connected to the surface of the draw core by using an adhesive, the slots or the tubes adhered to the draw core following a helical path around the longitudinal axis of said draw core, the direction of rotation of which changes periodically, wherein the draw core (1; 37), before being provided with the synthetic resin sheath (14) or with the tubes (43), is twisted, with the direction of twisting being reversed periodically, whereby as a result of said twisting of the draw core the slots of the synthetic resin sheath or the synthetic resin tubes with which said draw core is subsequently provided take up said periodically reversing helical path.

2. A method as claimed in claim 1, wherein the draw core is twisted so as to make several revolutions in one direction of rotation before the direction of rotation is reversed, whereby the tubes or the slots subsequently make corresponding revolutions.

3. An apparatus for carrying out the method as claimed in claim 1 or 2, which comprises either an extruder (3) for extruding a sheath (14) with slots (16) around a draw core (1) and a depositing machine (4) for depositing optical fibres (20) in the slots (16), or an adhesive dosing machine (39) for providing a layer of adhesive on a draw core (37) and a depositing device (41) for providing synthetic resin tubes (43) which contain fibres (44) on the draw core thus provided with said adhesive layer, said apparatus further comprising, before the extruder (3) or before the adhesive dosing machine (39), a clamping device (2; 30) which is reciprocally rotatable about the draw core (1; 37) and comprises wheels (8; 34) with which the draw core can be clamped, and therefore reciprocally twisted.

4. An apparatus as claimed in claim 3 wherein the wheels (8; 34) are regularly distributed over the circumference of the draw core.

5. An apparatus as claimed in claims 3 or 4, wherein the wheels (8; 34) are connected to resilient arms (7; 33) with which the pressure force of the wheels on the draw core can be adjusted.

6. An apparatus as claimed in claim 3, 4 or 5, wherein the wheels have a hollow profile which fits in the cylindrical surface of the draw core.

## Patentansprüche

1. Herstellungsverfahren für ein optisches Kabel, in welchem ein oder mehr Lichtleiter (20; 44) um einen zentralen Ziehkern (1; 37) vorgesehen sind, wobei die Lichtleiter entweder in Schlitzen (16), welche in der Oberfläche einer um den Ziehkern herum extrudierten Kunstharzumhüllung (14) ausgebildet sind, oder in Kunstharzröhren (43) vorgesehen sind, welche lose die Fasern (44) umhüllen und welche mit der Oberfläche des Ziehkerns mit Hilfe eines Klebstoffs verbunden werden, wobei die Schlitze oder Röhren, die an dem Ziehkern haften, einer schraubenlinienförmigen Bahn um die Längsachse des Ziehkerns herum folgen, dessen Drehrichtung periodisch geändert wird, dadurch gekennzeichnet, daß der Ziehkern (1; 37), bevor er mit der Kunstharzumhüllung (14) oder den Kunstharzröhren (43) versehen wird, gedreht wird, wobei die Drehrichtung periodisch umgekehrt wird, wodurch als Ergebnisse des Drehens des Ziehkerns die Schlitze der Kunstharzumhüllung oder der Kunstharzröhren, mit welchen der Ziehkern anschließend versehen wird, die sich periodisch umkehrende schraubenlinienförmige Bahn aufnehmen.

2. Verfahren nach Anspruch 1, dadurch gekennzeichnet, daß der Ziehkern gedreht wird, um so mehrere Umdrehungen in einer Drehrichtung auszuführen, bevor die Drehrichtung umgekehrt wird, wobei die Röhren oder die Schlitze anschließend entsprechende Umdrehungen ausführen.

3. Vorrichtung zur Durchführung des Verfahrens nach Anspruch 1 oder 2, dadurch gekennzeichnet, daß die Vorrichtung entweder einen Extruder (3) zum Extrudieren einer Umhüllung (14) mit Schlitzen (16) um einen Ziehkern (1) und eine Ablegeeinrichtung (4) zum Ablegen von Lichtleitern (20) in den Schlitzen (16) oder eine Klebstoffdosiereinrichtung (39) zum Aufbringen einer Klebstoffschicht auf einenm Ziehkern (37) und eine Ablegeeinrichtung (41) aufweist, um Kunstharzröhren (43), welche Lichtleiter (44) enthalten, auf dem Ziehkern vorzusehen, welcher mit der Klebstoffschicht versehen worden ist, und daß die Vorrichtung vor dem Extruder (3) oder vor der Klebestoffdosiereinrichtung (39) eine Klemmeinrichtung (2; 30) aufweist, welche um den Ziehkern (1; 37) hin- und herbewegbar ist, und Räder (8; 34) aufweist, mit welchen der Ziehkern festgeklemmt und daher hin- und her gedreht werden kann.

4. Vorrichtung nach Anspruch 3, dadurch gekennzeichnet, daß die Räder (8; 34) regelmäßig um den Umfang des Ziehkerns herum verteilt sind.

5. Vorrichtung nach einem der Ansprüche 3 oder 4, dadurch gekennzeichnet, daß die Räder (8, 34) mit federnden Armen (7; 33) verbunden sind, mittels welcher die Andrückkraft der Räder an dem Ziehkern eingestellt werden kann.

6. Vorrichtung nach einem der Ansprüche 3, 4 oder 5, dadurch gekennzeichnet, daß die Räder ein Hohlprofil aufweisen, welches zu der zylindrischen Oberfläche des Ziehkerns paßt.

**Revendications**

1. Procédé pour fabriquer en continu un élément de câble optique du type dans lequel une ou plusieurs fibres optiques (20; 44) sont disposées autour d'un noyau central de tirage (1; 37), lesdites fibres étant disposées soit dans des fentes (16) ménagées dans la surface d'une gaine (14) en résine synthétique extrudée autour du noyau de tirage, soit dans des tubes (43) en résine synthétique, qui enveloppent de façon lâche les fibres (44) et qui sont raccordés à la surface du noyau de tirage moyennant l'utilisation d'un adhésif, les fentes ou les tubes adhérant au noyau de tirage, suivant un trajet hélicoîdal autour de l'axe longitudinal dudit noyau de tirage, dont le sens de rotation change périodiquement, caractérisé en ce qu'on applique un torsadage au noyau de tirage (1; 37) avant qu'il soit équipé de la gaine (14) en résine synthétique ou des tubes (43), la direction du torsadage étan inversée périodiquement, ce qui a pour effet que, sous l'effet dudit torsadage du noyau de tirage, les fentes de la gaine en résine synthétique ou les tubes en résine synthétique, dont ledit noyau de tirage est équipé ultérieurement, suivent ledit trajet hélicoîdal s'inversant périodiquement.

2. Procédé selon la revendication 1, selon lequel on réalise un torsadage du noyau de tirage de manière à exécuter plusieurs rotations dans un sens avant que le sens de rotation soit inversé, ce qui a pour effet que les tubes ou les fentes exécutent ensuite des rotations correspondantes.

3. Dispositif pour mettre en oeuvre le procédé selon la revendication 1 ou 2, incluant soit une extrudeuse (3) pour extruder une gaine (14) munie de fentes (16) autour d'un noyau de tirage (1) et une machine de dépôt (4) servant à déposer des fibres optiques (20) dans les fentes (16), soit une machine (39) de dosage d'un adhésif servant à appliquer une couche d'adhésif sur le corps de tirage (37) et un dispositif de dépôt (41) servant à former des tubes (43) en résine synthétique, qui contiennent des fibres (44) disposées sur le noyau de tirage ainsi pourvu de ladite couche d'adhésif, ledit dispositif comprenant en outre, en amont de l'extrudeuse (3) ou en amont de la machine (39) de dosage de l'adhésif, un dispositif de serrage (2; 30) qui peut tourner alternativement autour du noyau de tirage (1; 37) et comporte des roues (8, 34), à l'aide desquelles le noyau de tirage peut être serré, et par conséquent tordu dans des sens alternés.

4. Dispositif selon la revendication 3, dans lequel les roues (8; 34) sont réparties de façon régulière autour de la circonférence du noyau de tirage.

5. Dispositif selon les revendications 3 ou 4, dans lequel les roues (8; 34) sont raccordées à des bras élastiques (7; 33), à l'aide desquels la force de pression des roues sur le noyau de tirage peut être réglée.

6. Dispositif selon l'une des revendications 3, 4 ou 5, dans lequel les roues possèdent un profil creux qui s'adapte à la surface cylindrique du noyau de tirage.

**FIG.1**

**FIG.2**

1

FIG.3

FIG.4

FIG.5

2